# EUROPEAN PATENT APPLICATION

(11) **EP 4 295 986 A1**
(43) Date of publication of application: **27.12.2023**
(21) Application number: 23173739.6
(22) Date of filing: 16.05.2023
(51) Int. Cl.: B23K 26/06, B23K 26/082, B23K 26/362, B23K 101/00

(54) **ABLATION TOOL**

(30) Priority: 08.06.2022 GB 202208383
(71) Applicant: Rolls-Royce plc, London N1 9FX (GB)
(72) Inventor: Norton, Andrew, Derby, DE24 8BJ (GB); O'Key, Michael, Derby, DE24 8BJ (GB)
(74) Representative: Rolls-Royce plc

(57) **Abstract**

A laser ablation tool comprising, a pulsed laser source, a prism (24) that rotates in a plane perpendicular to light from the laser source, and a mirror (25) that is moveable in at least one direction and which is set at an angle relative to the light from the laser source.

## Description

### Overview of the disclosure

The disclosure relates to a laser ablation tool. In particular, the disclosure relates to a means of controlling the output of a laser ablation tool.

### Background of the disclosure

Ablation is a common method used both to clean a component and as part of a repair process for that component. One particular method of interest within the field of ablation is laser ablation. Laser ablation uses a beam from a laser to heat up and vaporise a selected area of the component. By controlling the wavelength and the power of the laser the operator can adjust the amount of ablation that occurs on the workpiece. Laser ablation offers significant benefits over the other methods of ablation due to its non-contact nature; this means that greater control can be exercised over it. Furthermore, its adaptability means that it can be used in a number of different fields of industry.

Although laser ablation is a desirable tool it is difficult to use in restricted areas, such as those in a gas turbine engine where direct laser access is not possible. To overcome this limitation the laser needs to be coupled to a fibre with a borescope setup and then focussed using a micro-electromechanical system (MEMS) to manipulate the beam across the surface of an object to perform activities or by using a fixed optical structure with a diffractive optical element on the tip. However, these techniques have the following drawbacks: a MEMS architecture can be both expensive to produce and fragile when used within an enclosed environment. Current MEMS devices have less than mm features which, due to the choice of materials, can often fail when the device is knocked against the structure being worked on during deployment. Furthermore, due to the actuation methodology of having a series of electrical "fingers" which drive the actuation of the MEMS, the system is liable to short circuit when dust and/or debris get into the system. On the other hand, the use of a fixed diffractive optical element has advantages because it can shape the beam to different profiles for example top hat rather than Gaussian, which provides the advantage of being able to do a more controlled ablation of the surface. However, as it is a fixed optical structure, it is not possible to do on-the-fly adjustments when a larger / smaller piece of damage requires rectification. In addition, the system naturally spreads the beam over a large area, which reduces the beam intensity. This can be a downside because if the beam is spread too far the beam energy is insufficient for ablation. The aforementioned systems can often be fragile and limit the lifespan or not produce the requisite intensity of the ablation head. Consequently, it is desirable to produce a more robust controllable ablation head.

### Summary of the Disclosure

The scope of the disclosure is set out in the appended claims.

A laser ablation tool comprising, a pulsed laser source that travels along an axis of light, a prism that rotates by use of a rotation mechanism with the prism being located in a plane perpendicular to the axis of light from the laser source, and a mirror that is moveable in at least one direction and which is set at an angle relative to the axis of light from the laser source and wherein the laser ablation tool is mounted within a housing that is coupled to the end of a borescope or flexible robot arm, and wherein the laser source is located external to the arm with and the light from the laser source being coupled to the head using an optical fibre. The mirror may be set at 45° relative to the beam of the laser source.

After the laser output beam has been reflected from the mirror it may be directed to a lens.

The mirror may be able to move in at least one direction as well as move rotationally.

The mirror may be a concave or spherical mirror.

The rotation mechanisms may be a motor connected to the prism.

The rotation mechanism may comprise a motor that is mounted external to the laser ablation tool and which is coupled to the prism via a driveshafts.

The movement mechanism for the prism may be a piezoelectric drive.

The rotation mechanism may comprise a pneumatic turbine that is connected to the prism and is driven to rotate by directing a fluid to flow against the pneumatic turbine.

The rotation mechanism may be coupled to a gearing system, which increases the speed of rotation of the prism.

The rotating prism and mirror may be linked to encoders, so their position is accurately known.

The laser source may have a gate that can be controlled to stop the output of the laser.

According to a second aspect of the disclosure there is provided a method of ablating a component using the ablation tool as discussed above, wherein the method comprises: coupling a laser to the laser ablation head, positioning the laser ablation head in proximity to an area that requires ablation, starting the laser along with initiating the rotation means for driving the prism, using the laser and passing the beam through prism and moving the mirror in at least one direction so that the laser beam scans across a target area of a component that is to be ablated.

A computer program may be provided for performing the method of the second aspect.

The skilled person will appreciate that except where mutually exclusive, a feature described in relation to any one of the above aspects may be applied mutatis mutandis to any other aspect. Furthermore, except where mutually exclusive any feature described herein may be applied to any aspect and/or combined with any other feature described herein.

### Brief description of the figures

Embodiments will now be described by way of example only, with reference to the Figures, in which:
Figure 1 presents an example of the optical system used in the ablation process;
Figure 2 presents an example of the optical setup within the head for connection to borescope or flexible arm or continuum arm robot;
Figure 3 presents an example of the ablation tool with the mirror stage having multiple degrees of movement;
Figure 4 presents an example of the ablation tool with the mirror stage having multiple degrees of movement; and
Figure 5 presents a schematic of the operation. In operation a laser is coupled to the laser ablation head.

### Detailed Description

Aspects and embodiments of the present disclosure will now be discussed with reference to the accompanying figures. Further aspects and embodiments will be apparent to those skilled in the art.

The removal of material, such as thermal barrier coatings, can be performed by a high-power pulsed laser. The high-power laser pulse vaporises the material in a controlled way, such that the micron-sized deposits that have been vapourised and removed condense away from the region of interest. The use of a pulsed laser ensures that there is limited heat input into the surface, which could otherwise cause local microstructural changes; this for example, may be sintering of the thermal barrier coating, removal of pores, reduction in thermal fatigue compliance, and increased risk in spallation. In ablation systems a laser spot can be traced over the surface either by moving the probe or directing the beam.

The current disclosure utilises at least one rotating prism and a moveable mirror to move a focused ablation point along the surface of a target component. When light enters prism it is refracted as a result of a change in the phase velocity of the light as it passes from one medium to the medium of the prism and back to the first medium again. Snell's law allows for that as if the angle of incidence is changed then there is a corresponding change in the angle of refraction. Thus, by rotating a prism or an optical wedge, the beam will trace a defined output path. By controlling the shape of the prism and/or optical wedge it is possible to create a known output beam that is traced. For example, in a round wedge prism the output path will trace a circle. Thus, from a focussed laser input it is possible to trace a broader circle of focussed light. Utilising this the area of coverage of a laser ablation tool is increased so that it can cover a circle.

Laser ablation is a common process to perform in regions where there is easy access. However, it becomes more difficult in regions where there is limited access and no direct laser beam input. In such cases the beam needs to be directed to the area using a fibre, however, the output of this is limited as the ablation only occurs on the point at which the spot is directed at. If the fibre is coupled to a borescope of flexible/continuum robot it is possible to have a small amount of control over the laser output through movement of the output head. However, this is a rudimentary system and is not able to accurately move the beam over a certain area. Thus, by using movable optics within the head it possible to have control over the output of the beam. It has been found that coupling the rotating wedge prism into a head or a borescope or continuum robot allows for the laser output of the fibre laser to be traced over a circular path. By utilising a moving mirror, it is possible to increase the area that is ablated and as such have a controlled ablation path. Such a system could also be used outside of a continuum robot and may be part of an optical system to assist with ablation over a controlled area.

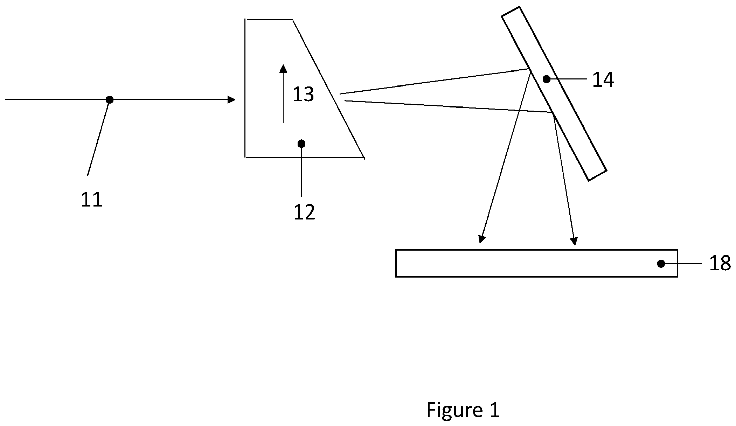

An example of the optical system used in the ablation process is shown in Figure 1. In this the laser light beam 11 is input into a rotating wedge 12. The wedge is rotated in a plane perpendicular to the input beam as shown by arrow 13. The wedge may be rotated either clockwise or anticlockwise. As discussed above the rotation of the wedge results in a circular output, which output is directed onto a mirror 14 that has a moveable base, such that it can at least be linearly moved with respect to the rotating wedge. By doing this it is possible to move the circular ablation path along the target component 15, so that a larger area and path can be ablated. The light output could be gated with control of the prism and the stage to prevent overlapping areas on the beam path being ablated twice. The output from the mirror can be directed into a lens to either focus or collimate the beam such that its output on the surface of the target is known.

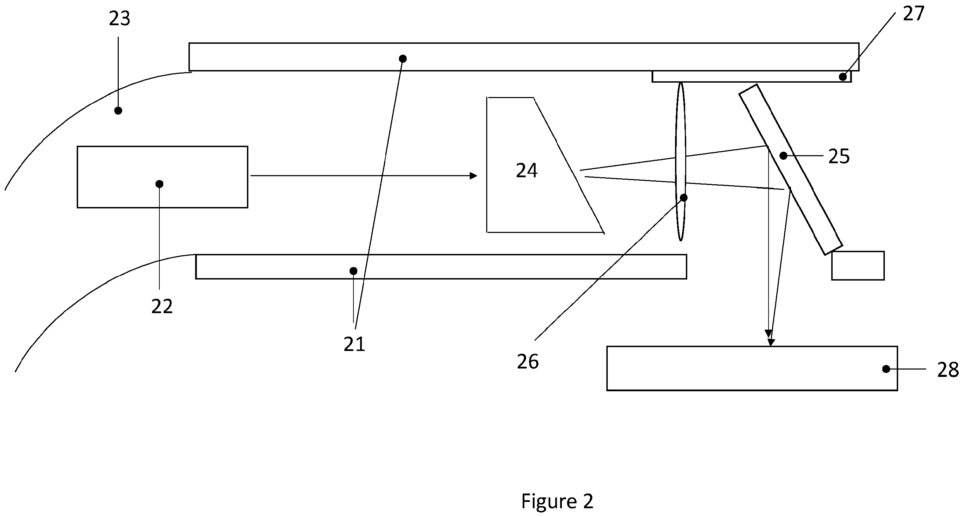

Figure 2 shows an example of the optical setup within the head for connection to a borescope or flexible arm or continuum arm robot. All of these systems that have a large number of degrees of freedom. In such a case the laser is held away from the head 21 and the light from the laser is coupled into a fibre 22. The fibre is passed down the body of the arm 23 and allows the light to pass along its length. The laser light is then outcoupled from the fibre and directed onto the rotating wedge 24. As the light travels to the rotating wedge it travels along an axis of light. The output of the rotating wedge/prism is then output onto a mirror 25, which is movable along the x-x plane of the figure. A lens 26 is coupled to the mechanism 27 that moves the mirror so that the two move together in tandem to ensure that the output is constant on the surface of the material 28. The mirror may be moved by any suitable means. For example, the mirror stage may be moved using piezoelectric controllers. Alternatively, the mirror may be moved by motors driving a moveable stage. The mirror may also have the ability to tilt in any axis. The mirror stage may have an encoder so that the precise position of the mirror is known. This will allow for the user to trace an accurate path along the surface of the component to be ablated.

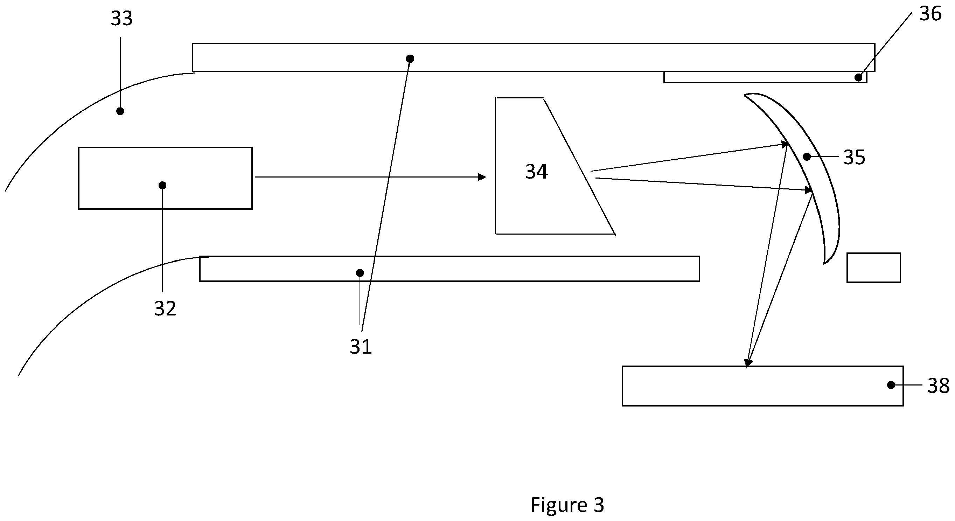

Figure 3 presents an example of the ablation tool with the mirror stage having multiple degrees of movement. In this, the optical head can also be part of a borescope, or flexible/continuum arm robot or alternatively part of a freestanding ablation tool. The laser is held away from the head 31 and may be coupled into the head using a fibre 32. This fibre can be passed down the body of the arm 33 of the robot system if being used. The laser light is directed onto the rotating wedge 34. The output of the rotating wedge/prism is then output onto a mirror 35, which is movable along the x-x plane as well as being partially rotatable so that it can tilt in a clockwise or anticlockwise direction as shown in the figure. The movement and the tilting is performed with a multi axis stage movement mechanism 36. The tilt can be in any axis. The mirror may be a concave or spherical mirror so that its output is focussed onto the desired target. Alternatively, the system may be provided with a lens 36 provided before the mirror that focusses the light from the mirror onto the surface of the target material 38. The mirror may be moved my any suitable means. For example, the mirror stage may be moved using piezoelectric controllers. Alternatively, the mirror may be moved by motors driving a moveable stage. The mirror stage may have an actuator so that the precise position of the mirror is known. This will allow for the user to trace an accurate path along the surface of the component to be ablated.

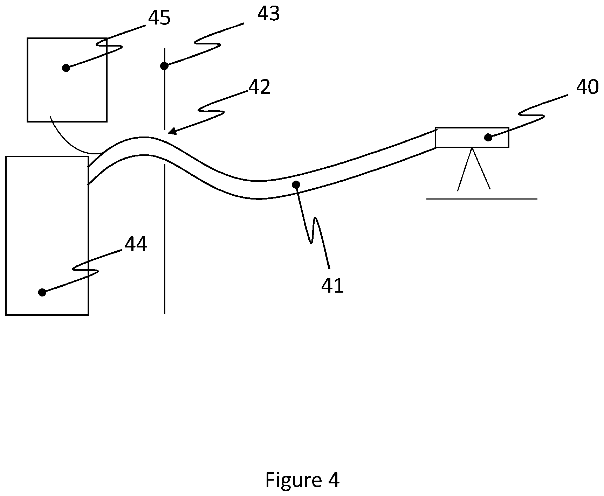

Figure 4 shows an example of a borescope laser ablation tool featuring the ablation head according to the present disclosure. In this the laser ablation head 40 is connected to the borescope conduit 41. The borescope and the laser ablation head are able to access a part of a complex system, such as a gas turbine engine, through an access port or borescope hole 42 in the casing 43. At the other end of the borescope there is a laser source 44, which couples the output of the laser with a fibre so that the beam can be transmitted along the borescope through an optical fibre. There is also a motor 45 to control the movement of the borescope.

This disclosure describes the use of a rotating optical crystal wedge/prism within a laser ablation head. The head is suitable to be connected to a robotic system such as a compliant robot or borescope or a walking swarm or segmented arm robots. This allows the head to be able to be deployed into a borescope port on the end of a deployment device - as shown above. The laser ablation head, as shown, functions by using a motor to rotate the wedges or prisms about their central axis. The wedges can be housed with suitable bearings to allow for rotation of the prism. In order for device to work light is directed from a laser source. The laser source is positioned proximal to the laser ablation head with the output being directed to the cavity containing the prisms. This output may be coupled using a fibre; this can be a single-mode or multi-mode laser fibre. A lens may be used at the end of the fibre to converge the laser spot and direct it parallel to the axis of rotation of the rotating prism or wedge. The laser beam then exits the device, such that it can ablate the surface of a component.

There are a number of options for mechanisms for spinning the prism or wedge within the laser ablation head. One such approach is to use miniaturised motors. The electrical cables for the motors may be routed through the centre of the borescope conduit parallel to the laser fibre. Alternatively, the motor coils could be located around a ring mounted to the prism or wedge and wherein the ring is made of a magnetic material. Alternatively, the motor may be located outside of the ablation head and move the prism/wedge using a drive shaft. The drive shafts may also have a gear system to increase or decrease the speed of rotation. The driveshaft may couple to the prism/wedge directly or via a gear drive. This driveshaft may be located parallel to the cavity containing the prism or wedge. For example, the drive shafts may pass down the borescope conduit and lie parallel to the laser fibre.

An alternative to using motors is to utilise a fluid medium. Such a mechanism may utilise a fluid like air, which can be passed through the internal cavity of the borescope and directed onto a miniaturised air turbine connected the prism. The advantage of this mechanism is that higher speeds can be achieved; this is akin to a dentist drill. The air driven mechanism also has the benefit that the air can be directed outside of the head to help remove unwanted material and spatter from the ablation process. This approach could also include the use of other fluid media such as water. A further method of driving the prism or wedge could utilise piezoelectrics drive connected to the prisms. The prism or wedge may be rotated in a clockwise or contraclockwise

Each of the above listed approaches to drive the prism could incorporate gear systems in order to spin the prism or wedge faster than the speed of the actuation method on its own. This can be important because scanning speed is a key input variable for laser ablation. The period of rotation can be set at any suitable value. For example, the period of rotation may be between 100 ms and 500 ms. All of the mechanisms listed above may operate either encoded or unencoded. The use of encoding has the advantage that the exact rotating of the prism is known. This known position from the encoding can be utilised by a control system to synchronise with the laser ablation process and may be coupled with an encoder on the movable mirror such that it only ablates at certain beam positions. Other options for encoders are possible such as optical means to identify the position of the prism/wedge. This may utilise having a marker that reflects a signal at a fixed position.

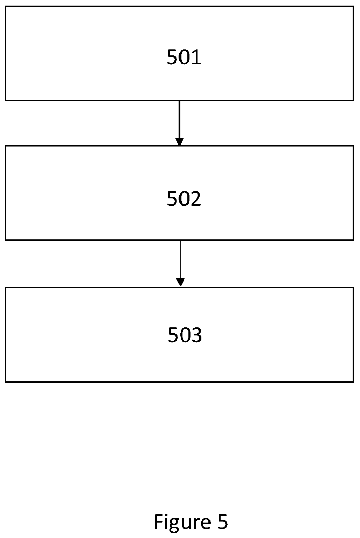

Figure 5 presents a schematic of the operation. In operation a laser is coupled to the laser ablation head. In step 501 the laser ablation head is inserted into the workspace and positioned into a location proximate to an area that requires ablation. In step 502 the laser is started along with the rotation means for driving the prisms. With the laser operating and the prisms spinning the laser can scan across the surface of the component to be scanned. If encoders are used in conjunction with a control program the motors and the laser can be linked so that a controlled scanning beam can be produced, as the laser output and the position of the crystals can be linked. The head can be repositioned after this first stage to work on a new target area. In step 503 the head is removed from the workspace.

The advantages of utilising a rotating prism or wedge beam-steering system as described above is the compactness, relative insensitivity to vibration, low moment of inertia, independent rotational axes, robustness and speed. However, there is a disadvantage in the system has inherent chromatic aberration. Chromatic aberrations can be corrected in the same way that lenses can: by combining materials that have differing indices and dispersion characteristics.

The system may be coupled to a computer program to control the process. The program may be an automatic program that runs pre-programmed ablation parameters or semiautomatic, such that an operator types in some of the parameters and the computer program calculates and runs an ablation process. Additionally, or alternatively, the program may be manually controlled such that an operator fully controls the movement of the head and the mirror. The program may have feedback from encoders on the prism and/or mirror, so that it knows the exact position of the two. The program may also be linked to a gate on the laser so that the system only ablates at known points. This can stop the system ablating the same area twice on a scan if the paths overlap as the beam is traced along the surface of the target material.

It will be understood that the invention is not limited to the embodiments above described and various modifications and improvements can be made without departing from the concepts described herein. Except where mutually exclusive, any of the features may be employed separately or in combination with any other features and the disclosure extends to and includes all combinations and sub-combinations of one or more features described herein.

## Claims

1. A laser ablation tool comprising,
a pulsed laser source that travels along an axis of light, a prism that rotates by use of a rotation mechanism with the prism being located in a plane perpendicular to the axis of light from the laser source, and a mirror that is moveable in at least one direction and which is set at an angle relative to the axis of light from the laser source and wherein the laser ablation tool is mounted within a housing that is coupled to the end of a borescope or flexible robot arm, and wherein the laser source is located external to the arm with the light from the laser source being coupled to the head using an optical fibre.

2. The laser ablation tool according to claim 1, wherein the mirror is set at 45° relative to the axis of light from the laser source.

3. The laser ablation tool according to any preceding claim, wherein after the laser output beam has reflected from the mirror it is directed to and passes through a lens.

4. The laser ablation tool according to any preceding claim wherein the mirror is able to move in at least one direction as well as move rotationally.

5. The laser ablation tool according to claim 4, wherein the mirror is a concave or spherical mirror.

6. The laser ablation tool of any preceding claim, wherein the rotation mechanism is a motor connected to the prism.

7. The laser ablation tool according to any one of claims 1-5, wherein the rotation mechanism comprises a motor that is mounted external to the laser ablation tool and is coupled to the prism via a driveshafts.

8. The laser ablation tool according to any one of claims 1-5, wherein the movement mechanism is a piezoelectric drive.

9. The laser ablation tool according to any one of claims 1-5, wherein the rotation mechanism comprises a pneumatic turbine that is connected to the prism and is driven to rotate by directing a fluid to flow against the pneumatic turbine.

10. The laser ablation tool according to any preceding claims wherein the rotation mechanism is coupled to a gearing system that is also connected to the prism

11. The laser ablation tool according to any preceding claim wherein the prism and mirror are coupled to encoders so their position is accurately known.

12. The laser ablation tool according to any preceding claim wherein the laser source has a gate that can be controlled to stop the output of the laser.

13. A method of ablating a component using the ablation tool according to any one of claims 1-12, wherein the method comprises: coupling a laser to the laser ablation tool, positioning the laser ablation head in proximity to an area that requires ablation, starting the laser along with initiating the rotation means for driving the prism, using the laser and passing the beam through prism and moving the mirror in at least one direction so that the laser beam scans across a target area of a component that is to be ablated.

14. A computer program for performing the method of claim 13.
